# EUROPEAN PATENT APPLICATION

(11) **EP 4 517 960 A1**
(43) Date of publication of application: **05.03.2025**
(21) Application number: 23916747.1
(22) Date of filing: 18.01.2023
(51) Int. Cl.: H01M 50/209, H01M 50/258, H01M 50/271

(54) **BATTERY CELL, BATTERY AND ELECTRICAL DEVICE**

(71) Applicant: Contemporary Amperex Technology Co., Limited, Ningde, Fujian 352100 (CN)
(72) Inventor: KE, Haibo, Ningde, Fujian 352100 (CN); MEI, Xiang, Ningde, Fujian 352100 (CN); LI, Quankun, Ningde, Fujian 352100 (CN); YU, Fan, Ningde, Fujian 352100 (CN); WANG, Peng, Ningde, Fujian 352100 (CN); XING, Chengyou, Ningde, Fujian 352100 (CN)
(74) Representative: Gong, Jinping
(86) International application number: PCT/CN2023/072956
(87) International publication number: WO 2024/152261

(57) **Abstract**

This application provides a battery cell, a battery, and an electric apparatus. The battery cell (200) includes: an electrode assembly (30) including a body portion (31) and a tab (32), where the body portion (31) has a body end surface (311), and the tab (32) is led out of the body end surface (311); and a housing (40) having a first wall (401), where the first wall (401) is provided with an electrolyte injection hole (402) and an electrode terminal (43), and the tab (32) is electrically connected to the electrode terminal (43). At least one surface of the tab (32) is provided with a protection sheet (33), the protection sheet (33) shielding at least part of a region, on the body portion (31), corresponding to the electrolyte injection hole (402).

## Description

### TECHNICAL FIELD

This application pertains to the field of battery technologies and more specifically relates to a battery cell, a battery, and an electric apparatus.

### BACKGROUND

Energy saving and emission reduction are crucial to the sustainable development of the automobile industry. Electric vehicles, with their advantages in energy conservation and environmental protection, have become an important part of sustainable development of the automobile industry. For electric vehicles, battery technology is an important factor in connection with their development.

During manufacturing of a battery cell, after an electrode assembly is mounted in a housing body, an electrolyte needs to be injected through an electrolyte injection hole of an end cover. During injection, the electrolyte will impact the electrode assembly, resulting in damage to an electrode plate or separator, and thus causing damage to or short circuit of a cell.

### TECHNICAL PROBLEM

Embodiments of this application are intended to provide a battery cell, a battery, and an electric apparatus, so as to solve the problem that in the related art, during injection, an electrolyte impacts an electrode assembly, thus causing damage to an electrode plate or separator.

### TECHNICAL SOLUTIONS

According to a first aspect, an embodiment of this application provides a battery cell. The battery cell includes: an electrode assembly including a body portion and a tab, where the body portion has a body end surface, and the tab is led out of the body end surface; and a housing having a first wall, where the first wall is provided with an electrolyte injection hole and an electrode terminal, and the tab is electrically connected to the electrode terminal; where the body portion has a first region corresponding to the electrolyte injection hole, and at least one surface of the tab is provided with a protection sheet, the protection sheet shielding at least part of the first region.

In the technical solution of this embodiment of this application, the protection sheet is provided on the tab to protect the tab, and the protection sheet is made to shield at least part of the region, on the body portion of the electrode assembly, that corresponds to the electrolyte injection hole, so that during injection of an electrolyte, impact of the electrolyte on the body portion can be alleviated so as to well protect the electrode assembly, and the risk that an electrode plate or separator of the electrode assembly is broken through during injection of the electrolyte can be reduced or *prevented.*

In some embodiments, the protection sheet shields all of the first region.

All of the first region of the body portion is shielded by the protection sheet, so that during injection of the electrolyte, the electrolyte only impacts the protection sheet and does not directly flush the body portion of the electrode assembly, so as to well protect the body portion, further reducing or preventing the risk that the electrode plate or separator of the electrode assembly is broken through during injection of the electrolyte.

In some embodiments, the tab includes a tab root portion connected to the body portion and a tab body led out of the tab root portion, where width of the tab root portion is greater than width of the tab body, and the protection sheet is affixed to the tab root portion.

The tab root portion is provided to be connected to the body portion, and the width of the tab root portion is set to be greater than the width of the tab body, so that the current conducting capability of the tab can be enhanced. The tab body is provided to be connected to the electrode terminal on the first wall, so as to facilitate assembly and connection. The protection sheet is affixed to the tab root portion for the tab root portion to support the protection sheet, which can enhance strength of support to the protection sheet, so as to enhance flushing resistance against the electrolyte.

In some embodiments, a separator of the body portion exceeds the tab root portion in a direction in which the tab is led out.

The separator of the body portion is made to exceed the tab root portion so that the tab root portion is embedded inside the separator, so as to enhance insulation and isolation, thereby reducing or preventing the risk of short circuit in the body portion.

In some embodiments, the width of the tab root portion is greater than width of the protection sheet.

The width of the protection sheet being set to be less than the width of the tab root portion can save materials and reduce costs; and the protection sheet with a smaller width being used also facilitates assembly and improves assembly efficiency.

In some embodiments, the electrode assembly includes a first tab and a second tab of opposite polarities, where the first tab is made of a first conductive material, the second tab is made of a second conductive material, electrical conductivity of the first conductive material is less than electrical conductivity of the second conductive material, and the first tab has the tab root portion.

The electrical conductivity of the first conductive material for manufacturing the first tab is smaller. Providing the tab root portion on the first tab can enhance the current flow capacity of the first tab. In addition, the first tab can be set to be thinner to reduce space occupied, which in turn increases capacity density of the battery cell.

In some embodiments, the electrode assembly includes two tabs of opposite polarities, where the electrolyte injection hole is located between the two tabs, at least one of the tabs is provided with the protection sheet, and at least one protection sheet shields at least part of the first region.

The electrolyte injection hole being arranged between the two tabs can facilitate the provision of the protection sheet on any of the tabs and extension of the protection sheet to the region corresponding to the electrolyte injection hole, so that during injection of the electrolyte, the flushing to the body portion of the electrode assembly by the electrolyte can be alleviated, thereby facilitating the assembly.

In some embodiments, the tab has a first surface, the first surface being a surface of the tab facing away from the first wall; the protection sheet includes a first protection sheet affixed to the first surface, the first protection sheet shielding the first region; and the body portion has a first side surface adjacent to the body end surface; where the first protection sheet extends from the body end surface of the body portion to the first side surface.

The first protection sheet extending from the body end surface of the body portion to the first side surface can not only enhance the structural strength of the connection between the first protection sheet and the body portion, but also better protect the body end surface of the body portion, avoiding or alleviating the flushing of the electrolyte to the body end surface of the body portion, and in particular alleviating the flushing of the electrolyte to an edge of the body end surface close to the first side surface, so as to better protect the body portion.

In some embodiments, the first protection sheet covers the first surface of the tab.

The first protection sheet being made to cover the first surface of the tab can better protect the tab and enhance the structural strength of the connection between the first protection sheet and the tab.

In some embodiments, the tab has a second surface, the second surface being a surface of the tab close to the first wall; and the battery cell further includes a current collecting member connecting the second surface and the electrode terminal.

The current collecting member is provided to connect the second surface of the tab to the electrode terminal, so as to facilitate electrical connection between the tab and the electrode terminal.

In some embodiments, the protection sheet includes a second protection sheet disposed on the second surface, and the second surface has a connection region connected to the current collecting member, with the second protection sheet and the connection region staggered.

The second protection sheet is provided on the second surface of the tab to protect the tab, while the second protection sheet and the connection region are made to be staggered to facilitate connection of the tab to the current collecting member for easy assembly.

In some embodiments, the second protection sheet has an extension portion, where the extension portion extends to a position, corresponding to the connection region, on a surface of the current collecting member facing away from the tab.

The extension portion is provided on the second protection sheet to extend to the position, of the current collecting member, corresponding to the connection region, so that the current collecting member can be protected, and the structural strength of connection of the second protection sheet can be enhanced.

In some embodiments, the second protection sheet shields the first region.

During injection of the electrolyte, the above structural design enables the second protection sheet to buffer the electrolyte being injected to alleviate the flushing to the body portion, thus well protecting the body portion.

In some embodiments, the body portion has a second side surface adjacent to the body end surface; and the second protection sheet extends to the second side surface.

The second protection sheet extending to the second side surface can enhance the structural strength of the connection between the second protection sheet and the body portion, protect the connection between the tab and the body portion, especially when the tab is disposed, on the body end surface, apart from the second side surface, and also protect a region, on the body end surface, between the tab and the second side surface to avoid or alleviate the flushing of the electrolyte to this region, thereby better protecting the body portion.

In some embodiments, the battery cell includes a plurality of electrode assemblies, where the plurality of electrode assemblies are divided into two groups, and the tabs of two electrode assemblies adjacent to the electrolyte injection hole are each provided with the protection sheet.

The plurality of electrode assemblies being used can increase the capacity density of the battery cell, and also facilitate processing and manufacturing of the electrode assemblies. The protection sheets being provided on the tabs of the two electrode assemblies adjacent to the electrolyte injection hole can save materials and reduce costs. In addition, because the two electrode assemblies adjacent to the electrolyte injection hole are more susceptible to the impact of the electrolyte during injection of the electrolyte, the protection sheets being provided on the tabs of the two electrode assemblies can better allow the protection sheet to shield the region corresponding to the electrolyte injection hole, so as to protect the body portion of the electrode assembly.

In some embodiments, the protection sheets are affixed to surfaces, facing away from the first wall, of the two tabs adjacent to the electrolyte injection hole, and the protection sheet shields the first region of the electrode assembly in which the protection sheet is located.

The protection sheets being provided on the surfaces, facing away from the first wall, of the two tabs adjacent to the electrolyte injection hole can protect the tabs, and when the protection sheets are made to shield the region corresponding to the electrolyte injection hole, the protection sheet with a smaller area can be used to save the materials of the protection sheet and reduce the costs, and also facilitate mounting of the protection sheet due to the reduced area of the protection sheet used.

In some embodiments, the first wall is provided with a shield plate shielding the electrolyte injection hole, and an end, away from the body portion, of the protection sheet adjacent to the electrolyte injection hole is located on a side of the shield plate.

The shield plate is provided on the first wall to shield the electrolyte injection hole, which can provide buffering during injection of the electrolyte through the electrolyte injection hole. The end, away from the body portion, of the protection sheet adjacent to the electrolyte injection hole is located on a side of the shield plate, which allows the shield plate to extend between the ends, away from the body portion, of the two adjacent protection sheets, so that not only the electrolyte being injected can be buffered by the protection sheet, but also space utilization inside the housing can be improved, the capacity density of the battery cell can be improved, and the shield plate can be prevented from bursting the protection sheet.

In some embodiments, the protection sheets are disposed on surfaces, close to the first wall, of the tabs of the two electrode assemblies adjacent to the electrolyte injection hole.

When a plurality of electrode assemblies are provided, during injection, the electrolyte is more likely to flush the two electrode assemblies and tabs adjacent to the electrolyte injection hole, and the protection sheets being disposed on the surfaces, close to the first wall, of the two tabs adjacent to the electrolyte injection hole can provide good protection for the two tabs adjacent to the electrolyte injection hole, alleviating the flushing of the electrolyte to the tabs, and also alleviating the flushing of the electrolyte to the body portion due to the buffering of the protection sheet on the electrolyte.

In some embodiments, the protection sheets corresponding to the surfaces, close to the first wall, of the two tabs adjacent to the electrolyte injection hole are of a one-piece structure.

The protection sheets corresponding to the surfaces, close to the first wall, of the two tabs adjacent to the electrolyte injection hole being arranged as a one-piece structure allows the protection sheet to shield the region corresponding to the electrolyte injection hole to alleviate the impact of the electrolyte, thereby protecting the body portion of the electrode assembly.

In some embodiments, the protection sheets corresponding to the surfaces of the tabs close to the first wall are connected to corresponding tabs of the electrode assemblies.

The protection sheets being connected to corresponding tabs of the electrode assemblies facilitates the mounting and fixing of the protection sheets and improves the assembly efficiency.

In some embodiments, the body portion has a body side surface adjacent to the body end surface; and in a thickness direction of the body portion, an end of the protection sheet on the surface of the tab close to the first wall extends to the body side surface of the body portion adjacent to the end.

The end of the protection sheet on the surface, close to the first wall, of the tab extending to the body side surface of the body portion adjacent to the end can enhance the strength of the connection between the protection sheet and the corresponding body portion, and also provide good protection for the surface of the tab close to the first wall.

In some embodiments, the protection sheet and the tab are connected through adhesion; or the protection sheet and the tab are connected through ultrasonic welding.

The protection sheet and the tab being connected through adhesion facilitates both connection and assembly. The protection sheet and the tab being connected through ultrasonic welding can enhance the strength of the connection between the protection sheet and the tab.

According to a second aspect, an embodiment of this application provides a battery including the battery cell according to the foregoing embodiments.

According to a third aspect, an embodiment of this application provides an electric apparatus including the battery according to the foregoing embodiment.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BENEFICIAL EFFECTS

### BRIEF DESCRIPTION OF DRAWINGS

To describe the technical solutions in the embodiments of this application more clearly, the following briefly describes the accompanying drawings required for describing the embodiments or exemplary art. Apparently, the accompanying drawings in the following description show merely some embodiments of this application, and persons of ordinary skill in the art may still derive other drawings from these accompanying drawings without creative efforts.
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a schematic structural diagram of an end cover and an electrode assembly in the battery cell in FIG. 3;
FIG. 5 is a schematic structural diagram of an unfolded electrode assembly in the battery cell in FIG. 3;
FIG. 6 is a schematic three-dimensional structural diagram of the electrode assembly in FIG. 5;
FIG. 7 is a schematic structural diagram of a connection between a tab and a current collecting member of the electrode assembly in FIG. 6;
FIG. 8 is a schematic structural cross-sectional view of a battery cell according to some embodiments of this application;
FIG. 9 is a schematic structural diagram of a portion of the electrode assembly in FIG. 8;
FIG. 10 is a schematic structural cross-sectional view of a battery cell according to some embodiments of this application;
FIG. 11 is a schematic structural diagram of a portion of the electrode assembly in FIG. 10;
FIG. 12 is a schematic structural cross-sectional view of a battery cell according to some embodiments of this application;
FIG. 13 is a schematic structural cross-sectional view of a battery cell according to some embodiments of this application;
FIG. 14 is a schematic structural cross-sectional view of a battery cell according to some other embodiments of this application;
FIG. 15 is a schematic structural cross-sectional view of a battery cell according to still some other embodiments of this application;
FIG. 16 is a schematic structural cross-sectional view of a battery cell according to some embodiments of this application;
FIG. 17 is a schematic structural cross-sectional view of a battery cell according to some other embodiments of this application;
FIG. 18 is a schematic structural cross-sectional view of a battery cell according to some embodiments of this application;
FIG. 19 is a schematic structural cross-sectional view of a battery cell according to some other embodiments of this application; and
FIG. 20 is a schematic structural cross-sectional view of a battery cell according to still some other embodiments of this application.

Major reference signs in the figures:
1000. vehicle; 1001. battery; 1002. controller; 1003. motor;
100. box; 101. first part; 102. second part;
200. battery cell;
30. electrode assembly; 31. body portion; 311. body end surface; 312. body side surface; 3121. first side surface; 3122. second side surface; 32. tab; 3201. first surface; 3202. second surface; 3203. connection region; 321. first tab; 322. second tab; 3231. tab body; 3232. tab root portion; 33. protection sheet; 330. far end; 331. first protection sheet; 332. second protection sheet; 3321. extension portion; 34. insulating sheet;
40. housing; 401. first wall; 402. electrolyte injection hole; 403. shield plate; 41. end cover; 42. housing body; 43. electrode terminal; 431. first terminal; 432. second terminal;
51. current collecting member; 511. first current collecting member; 512. second current collecting member;
52. supporting plate;
X. width direction; Y. thickness direction; and Z. height direction.

### EMBODIMENTS OF THE PRESENT INVENTION

To make the technical problems to be solved, technical solutions, and beneficial effects of this application more comprehensible, the following describes this application in detail with reference to accompanying drawings and embodiments. It should be understood that the specific embodiments described herein are merely used to explain this application but are not intended to limit this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "include", and "have" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. Therefore, a feature limited by "first" or "second" may explicitly or implicitly include one or more features.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may combine with another embodiment in any suitable manner.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces. "Several" means one or more unless otherwise specifically stated.

In the description of the embodiments of this application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

In the description of the embodiments of this application, unless otherwise expressly specified and limited, when a component is referred to as being "fastened to" or "disposed on" another component, it may be directly on the another component, or may be indirectly on the another component. When a component is referred to as being "connected to" another component, it may be directly connected to the another component, or may be indirectly connected to the another component.

In the description of the embodiments of this application, unless otherwise expressly specified and limited, the technical term "adjacent" means being positionally close. For example, when there are three components A₁, A₂, and B, if the distance between A₁ and B is greater than the distance between A₂ and B, then A₂ is closer to B compared to A₁. In other words, A₂ is adjacent to B, and it can also be said that B is adjacent to A₂. For another example, when there are a plurality of components C, and the plurality of components C are denoted as C₁, C₂, ..., and C_{N}, if one of the components C, such as C₂, is closer to component B compared to other components C, then B is adjacent to C₂, and it can also be said that C₂ is adjacent to B.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell. In some cases, the battery cell may also be used directly, that is, the battery may also not include a box, which is not limited herein.

If a plurality of battery cells are provided in a battery, the plurality of battery cells may be connected in series, parallel, or series-parallel, where being connected in series-parallel means a combination of series and parallel connections of the plurality of battery cells. The plurality of battery cells may be directly connected in series, parallel, or series-parallel, and then an entirety constituted by the plurality of battery cells is accommodated in the box. Certainly, the battery may be formed by a plurality of battery cells connected in series, parallel, or series-parallel first to form a battery module and then a plurality of battery modules being connected in series, parallel, or series-parallel to form an entirety which is accommodated in the box. The battery may further include other structures. For example, the battery may further include a busbar configured to implement electrical connection between the plurality of battery cells.

The battery cell in the embodiments of this application includes an electrode assembly and a housing. The electrode assembly is also referred to as a bare battery cell. The electrode assembly includes a positive electrode plate, a negative electrode plate, and a separator. The electrode assembly mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of the positive electrode current collector not coated with the positive electrode active substance layer protrudes out of the part of the positive electrode current collector coated with the positive electrode active substance layer. The part not coated with the positive electrode active substance layer serves as a positive electrode tab or a metal conductor is welded to and led out of the positive electrode current collector to serve as the positive electrode tab. A lithium-ion battery is used as an example, for which, the positive electrode current collector may be made of aluminum, and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of the negative electrode current collector not coated with the negative electrode active substance layer protrudes out of the part of the negative electrode current collector coated with the negative electrode active substance layer. The part not coated with the negative electrode active substance layer serves as a negative electrode tab or a metal conductor is welded to and led out of the negative electrode current collector to serve as the negative electrode tab. The negative electrode current collector may be made of copper, and the negative electrode active substance may be carbon, silicon, or the like. To allow a large current to pass through without any fusing, a plurality of positive electrode tabs can be led out of the positive electrode plate and be stacked together to form an entire positive electrode tab; and similarly, a plurality of negative electrode tabs can be led out of the negative electrode plate and be stacked together to form an entire negative electrode tab. It can be understood that in the electrode assembly, a positive electrode tab can be led out of the positive electrode plate and a negative electrode tab can be led out of the negative electrode plate. Both the positive and negative electrode tabs are referred to as tabs. In other words, the electrode assembly is provided with two tabs of opposite polarities, one is the positive electrode tab and the other is the negative electrode tab. Accordingly, the electrode assembly includes a body portion and the tabs. The positive electrode plate, the negative electrode plate, and the separator are stacked and wound to form the body portion of the electrode assembly, and the tabs are led out of the body portion.

The electrode assembly may be a wound structure or a stacked structure. The embodiments of this application are not limited thereto. In a wound structure, the tabs are typically welded onto the current collector and then the parts are arranged in a sequence of positive electrode plate - separator - negative electrode plate - separator and then wound to form a cylindrical or prismatic cell. In a stacked structure, the electrode tabs are typically led out of the current collector, and the positive electrode plate, the negative electrode plate, and the separator are arranged in a sequence of positive electrode plate - separator - negative electrode plate - separator and then stacked together layer by layer to form a stacked battery cell, where the separator can be cut and directly stacked as separator plates, or the separator can be folded in a Z-shape without being cut. The separator may be made of PP (polypropylene, polypropylene), PE (polyethylene, polyethylene), or the like. The separator is an insulating film disposed between the positive electrode plate and the negative electrode plate. A main function of the separator is to separate the positive and negative electrodes and prevent the electrons in the battery from passing freely to avoid a short circuit, while allowing ions in an electrolyte to freely pass between the positive and negative electrodes to form a circuit between the positive and negative electrodes. The positive electrode plate and the negative electrode plate are collectively referred to as electrode plates. The positive electrode tab and negative electrode tab are collectively referred to as tabs.

A housing is a shell structure with an accommodating space inside. The electrode assembly is placed in the accommodating space of the housing for the housing to house and protect the electrode assembly.

After the electrode assembly is manufactured, the electrode assembly needs to be mounted in the housing, and an electrolyte is injected to immerse the electrode assembly in the electrolyte so that the electrode assembly can fully absorb the electrolyte. However, during injection of the electrolyte, a certain impact force is present, so that when impacting the body portion of the electrode assembly, the electrolyte impacts the separator and the electrode plates of the body portion, which may cause folding of the separator and thus exposure of the electrode plate, leading to self-discharge due to lapping of the tab to a body end surface of the electrode plate. This may even cause damage to the electrode plate or separator, which consumes electrical energy and even cause the risk of short circuit in the battery, affecting performance and service life of the battery.

Based on the above considerations, to solve the problem that during injection of the electrolyte, the electrolyte flushes the electrode assembly and causes folding of the separator or even breakage of the electrode plate or separator, the embodiments of this application provide a battery cell. A protection sheet provided on a tab extends to a region corresponding to an electrolyte injection hole to at least partially shields the region, corresponding to the electrolyte injection hole, on a body portion of an electrode assembly. In this way, during injection of the electrolyte, the protection sheet can buffer and disperse the electrolyte being injected, so as to alleviate the impact of the electrolyte on the body portion and well protect the electrode assembly, which in turn avoids folding of the separator due to flushing of the electrolyte, reduce or prevent the risk that an electrode plate or separator of the electrode assembly is broken through during injection of the electrolyte, and improve the performance and service life of a battery.

The battery cell disclosed in the embodiments of this application may be used for electric apparatuses that use a battery as a power source or various energy storage systems that use a battery as an energy storage element, such as an energy storage power system applied to a hydroelectric, thermal, wind, and solar power plant. The electric apparatus may be but is not limited to a mobile phone, a tablet computer, a laptop computer, an electric toy, an electric tool, an electric bicycle, an electric motorcycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus provided in an embodiment of this application being a vehicle is used as an example for description.

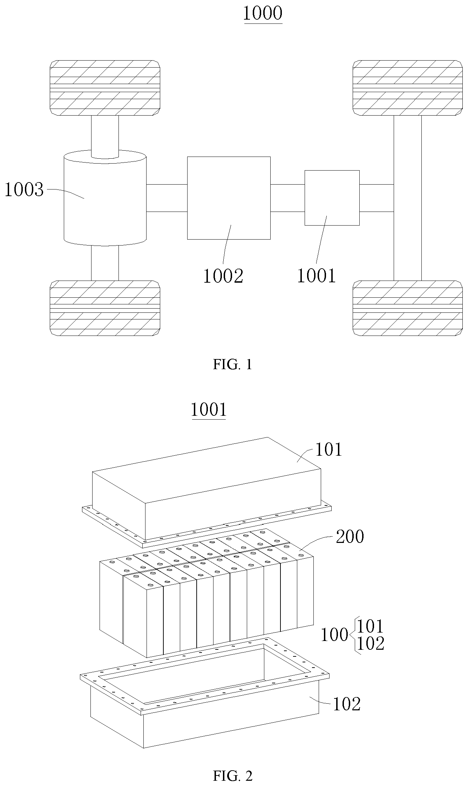

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle. The new energy vehicle may be a battery electric vehicle, a hybrid electric vehicle, a range-extended electric vehicle, or the like. The vehicle 1000 is provided with a battery 1001 inside, and the battery 1001 may be disposed at the bottom, front, or rear of the vehicle 1000. The battery 1001 may be configured to supply power to the vehicle 1000. For example, the battery 1001 may be used as an operational power source for the vehicle 1000. The vehicle 1000 may further include a controller 1002 and a motor 1003, where the controller 1002 is configured to control the battery 1001 to supply power to the motor 1003, for example, to satisfy power needs of start, navigation, and driving of the vehicle 1000.

In some embodiments of this application, the battery 1001 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural exploded view of a battery 1001 according to some embodiments of this application. The battery 1001 includes a box 100 and a battery cell 200, where the battery cell 200 is accommodated in the box 100. The box 100 is configured to provide an accommodating space for the battery cell 200. The box 100 may be a variety of structures. In some embodiments, the box 100 may include a first part 101 and a second part 102. The first part 101 and the second part 102 fit together so that the first part 101 and the second part 102 jointly define a space for accommodating the battery cell 200. The second part 102 may be a hollow structure with one end open, and the first part 101 may be a plate structure, where the first part 101 covers the open side of the second part 102 for the first part 101 and the second part 102 to jointly define an accommodating space; or alternatively, the first part 101 and the second part 102 may both be hollow structures with one side open, where the open side of the first part 101 is engaged with the open side of the second part 102. Certainly, the box 100 formed by the first part 101 and the second part 102 may have a variety of shapes, for example, cylinder or cuboid. A plurality of battery cells are connected in parallel, series, or series-parallel, and then put into the box 100 formed after the first par 101 and the second part 102 are snap-fitted.

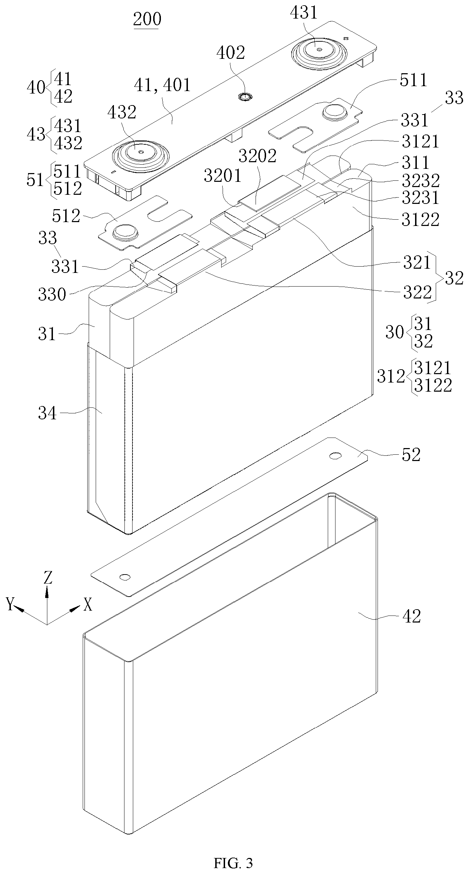

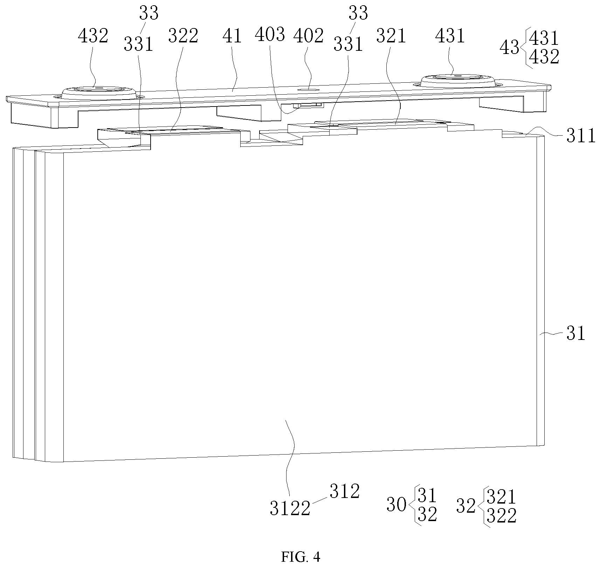

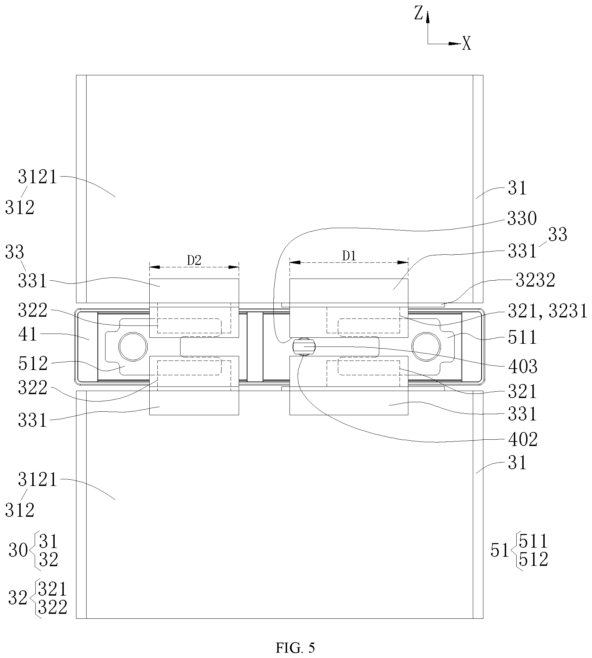

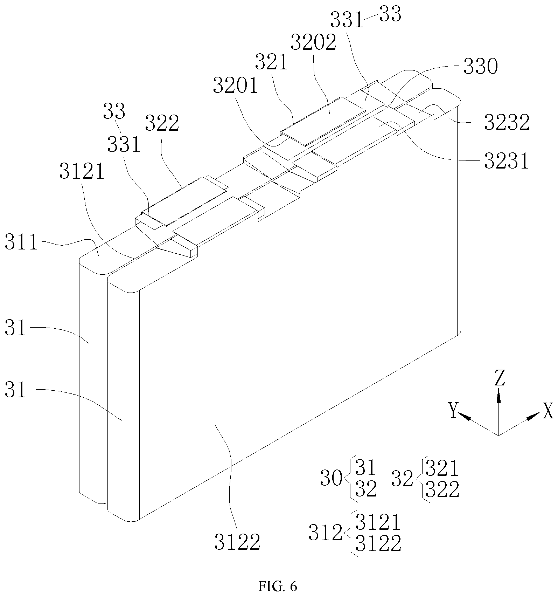

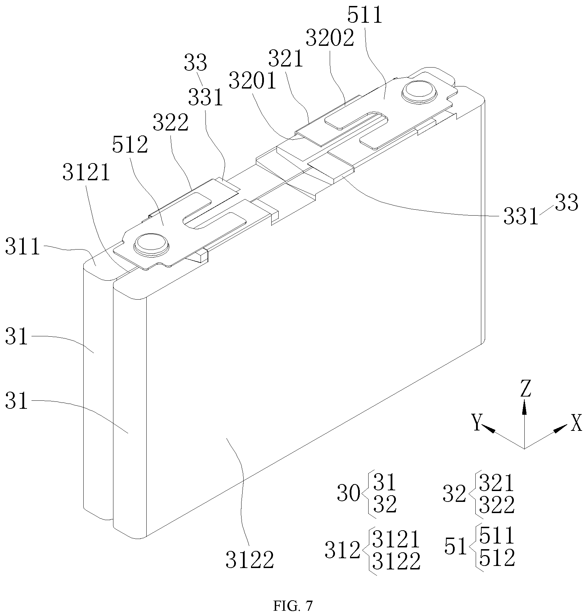

Referring to FIG. 3, FIG. 3 is a schematic structural exploded view of a battery cell 200 according to some embodiments of this application. Referring to FIGs. 4 to 7, FIG. 4 is a schematic structural diagram of an end cover 41 separated from an electrode assembly 30 in a battery cell 200 according to some embodiments of this application; FIG. 5 is a schematic structural diagram of an unfolded electrode assembly 30 in a battery cell 200 according to some embodiments of this application; FIG. 6 is a schematic three-dimensional structural diagram of an electrode assembly 30 in a battery cell 200 according to some embodiments of this application; and FIG. 7 is a schematic structural diagram of a connection between a tab 32 and a current collecting member 51 of an electrode assembly 30 in a battery cell 200 according to some embodiments of this application

The battery cell 200 includes a housing 40 and an electrode assembly 30. The electrode assembly 30 is mounted in the housing 40 for the housing 40 to accommodate and protect the electrode assembly 30. After the electrode assembly 30 is mounted in the housing 40, an electrolyte is further added to the housing 40 to allow the electrode assembly 30 to absorb the electrolyte.

The electrode assembly 30 includes a body portion 31 and a tab 32, with the tab 32 led out of the body portion 31.

The housing 40 has a first wall 401, the first wall 401 being a side wall of the housing 40. The first wall 401 is provided with an electrolyte injection hole 402 for injecting the electrolyte into the housing 40 through the electrolyte injection hole 402. The first wall 401 is provided with an electrode terminal 43, where the first wall 401 supports the electrode terminal 43, and the electrode terminal 43 is electrically connected to the tab 32.

For ease of description, a region, on the body portion 31, corresponding to the electrolyte injection hole 402 is defined as a first region, and during injection of the electrolyte, the electrolyte enters the housing 40 through the electrolyte injection hole 402, and the electrolyte impacts the first region on the body portion 31. To be specific, a region that is on the body portion 31 of the electrode assembly 30 mounted in the housing 40 and corresponds to the electrolyte injection hole 402 is the first region; that is, during injection of the electrolyte, a region, on the body portion 31, that the electrolyte directly flushes is the first region.

At least one surface of the tab 32 is provided with a protection sheet 33, and the protection sheet 33 shields at least part of the region, on the body portion 31, corresponding to the electrolyte injection hole 402. In other words, the region, on the body portion 31, corresponding to the electrolyte injection hole 402 is at least partially shielded by the protection sheet 33, that is, the protection sheet 33 shields the first region on the body portion 31, so that during injection of the electrolyte through the electrolyte injection hole 402, the protection sheet 33 can buffer the electrolyte to alleviate the impact of the electrolyte on the body portion 31, so as to avoid folding of the separator due to the flushing of the electrolyte, thus reducing or preventing the risk that an electrode plate or separator of the electrode assembly 30 is broken through during injection of the electrolyte, and improving performance and service life of a battery. In these embodiments of this application, the protection sheet 33 is provided on the tab 32 to protect the tab 32, and the protection sheet 33 is made to shield at least part of the region, on the body portion 31 of the electrode assembly 30, that corresponds to the electrolyte injection hole 402, so that during injection of the electrolyte, impact of the electrolyte on the body portion 31 can be alleviated so as to well protect the electrode assembly 30, and the risk that the electrode plate or separator of the electrode assembly 30 is broken through during injection of the electrolyte can be reduced or prevented.

The protection sheet 33 is a sheet structure provided on the tab 32 to protect the tab 32. In some embodiments, the protection sheet 33 may be an insulating film for providing good insulation and protection. The protection sheet 33 may be made of a material such as PP (Polypropylene, polypropylene), PE (Polyethylene, polyethylene), PET (polyethylene glycol terephthalate, polyethylene glycol terephthalate), or the like.

The electrode terminal 43 refers to a conductive member provided on the first wall 401 of the housing 40. The electrode terminal 43 is connected to the tab 32 of the electrode assembly 30 to output electrical energy of the battery cell 200 or to charge the battery cell 200. The electrode terminal 43 of the battery cell 200 is typically provided in a quantity of two, and the two electrode terminals 43 are connected to the positive and negative electrode tabs 32 of the electrode assembly 30 respectively. The electrode terminal 43 connected to the positive electrode tab 32 is the positive electrode terminal 43, and the electrode terminal 43 connected to the negative electrode tab 32 is the negative electrode terminal 43. The electrode assembly 30 is connected to the electrode terminal 43 on the end cover 41 to form the battery cell 200, and certainly, the battery cell 200 may include other functional components.

In some embodiments, the two tabs 32 of opposite polarities of the electrode assembly 30 may be a first tab 321 and a second tab 322 respectively, where the first tab 321 may be the positive electrode tab 32 and the second tab 322 may be the negative electrode tab 32. Certainly, the first tab 321 may be the negative electrode tab 32 and the second tab 322 may be the positive electrode tab 32. Accordingly, the electrode terminal 43 is also provided in a quantity of two. The electrode terminal 43 connected to the first tab 321 may be referred to as a first terminal 431, and the electrode terminal 43 connected to the second tab 322 may be referred to as a second terminal 432.

As shown in FIG. 3, the electrode assembly 30 has a height direction, a width direction, and a thickness direction. In the figure, the direction Z is the height direction of the electrode assembly 30; the direction X is the width direction of the electrode assembly 30; and the direction Y is the thickness direction of the electrode assembly 30. The height direction of the electrode assembly 30 is also a height direction of the body portion 31 thereof; the width direction of the electrode assembly 30 is also a width direction of the body portion 31 thereof; and the thickness direction of the electrode assembly 30 is also a thickness direction of the body portion 31 thereof.

The battery cell 200 may include one or more electrode assemblies 30. When the battery cell 200 includes a plurality of electrode assemblies 30, the plurality of electrode assemblies 30 are divided into two groups, each group including at least one electrode assembly 30. For example, when the electrode assemblies 30 are provided in a quantity of two, the two electrode assemblies 30 are divided into two groups. However, when the quantity of the electrode assemblies 30 is greater than two, at least one group includes at least two electrode assemblies 30, while the other group includes at least one electrode assembly 30. When the quantity of electrode assemblies 30 is an even number, the quantity of electrode assemblies 30 in the two groups may be set to be the same.

Referring to FIGs. 3 to 6, for ease of description, it is defined that: the surface of the body portion 31 of the electrode assembly 30 on which the tab 32 is led out is defined as a body end surface 311 of the body portion 31. In this way, the body portion 31 has the body end surface 311, and the tab 32 is led out of the first end surface 311. In other words, the tab 32 is connected to the body portion 31 through the body end surface 311 of the body portion 31. The body end surface 311 of the body portion 31 is a surface at an end of the body portion 31 in the height direction (that is, the direction Z).

For ease of description, it is defined that: the body portion 31 of the electrode assembly 30 has a body side surface 312, where the body side surface 312 is a surface on the body portion 31 adjacent to the body end surface 311. The body side surface 312 of the body portion 31 includes opposite first side surface 3121 and second side surface 3122, where the first side surface 3121 and the second side surface 3122 are both surfaces defined by the height direction (that is, the direction Z) and width direction (that is, the direction X) of the body portion 31. Therefore it can be learned that the normal direction of the first side surface 3121 and the second side surface 3122 is the thickness direction (that is, the direction Y) of the body portion 31, that is, distance between the first side surface 3121 and the second side surface 3122 is thickness of the body portion 31.

For ease of description, it is defined that: opposite surfaces of the tab 32 are the first surface 3201 and the second surface 3202. When the tab 32 is flattened along the height direction (that is, the direction Z) of the body portion 31, the thickness direction of the body portion 31 is also the thickness direction of the tab 32, the first surface 3201 of the tab 32 and the first side surface 3121 of the body portion 31 are located on a same side of the tab 32 in the thickness direction, and the second surface 3202 of the tab 32 and the second side surface 3122 of the body portion 31 are located on a same side of the tab 32 in the thickness direction.

Since the tab 32 is typically connected to the electrode terminal 43 on the first wall 401 before assembly, and then the tab 32 is bent for the electrode assembly 30 to be mounted in the housing 40, as for the manufactured battery cell 200, the first surface 3201 of the tab 32 is a surface of the tab 32 facing away from the first wall 401, and the second surface 3202 of the tab 32 is a surface of the tab 32 close to the first wall 401.

In some embodiments, referring to FIGs. 3 and 7, the battery cell 200 further includes a current collecting member 51. The current collecting member 51 is a conductive member connecting the tab 32 and the electrode terminal 43. The current collecting member 51 may be a structure such as a conductive sheet or a conductive adapter sheet. The current collecting member 51 connects the tab 32 and the electrode terminal 43 to facilitate the connection between the tab 32 and the electrode terminal 43, enabling a more stable connection. It can be understood that in some cases, the tab 32 may also be directly connected to the electrode terminal 43.

The electrode assembly 30 typically includes two tabs 32 of opposite polarities, and the electrode terminal 43 is also provided in a quantity of two. Accordingly, the current collecting member 51 is typically provided in a quantity of two. The two current collecting members 51 correspond to the two electrode terminals 43 respectively. Each current collecting member 51 is connected to the corresponding electrode terminal 43, and each current collecting member 51 is connected to the corresponding tab 32. In other words, each tab 32 is connected to the corresponding electrode terminal 43 through the current collecting member 51 to facilitate the connection between the tab 32 and the electrode terminal 43, enabling a more stable connection. For ease of description, the current collecting member 51 connected to the first terminal 431 is referred to as the first current collecting member 511, and the first tab 321 is connected to the first current collecting member 511; and the current collecting member 51 connected to the second terminal 432 is referred to as the second current collecting member 512, and the second tab 322 is connected to the second current collecting member 512.

In the following description of embodiments, unless otherwise specified, the term "tab" may refer to the first tab 321, the second tab 322, or both the first tab 321 and the second tab 322; the term "electrode terminal" may refer to the first terminal 431, the second terminal 432, or both the first terminal 431 and the second terminal 432; and the term "current collecting member" may refer to the first current collecting member 511, the second current collecting member 512, or both the first current collecting member 511 and the second current collecting member 512.

In some embodiments, referring to FIG. 3, the housing 40 includes a housing body 42 and an end cover 41, where the end cover 41 covers the housing body 42 to form the housing 40 structure. The electrode assembly 30 is mounted in the housing body 42, and the end cover 41 covers the housing body 42 so that the electrode assembly 30 is mounted in the housing 40.

The end cover 41 is a component that covers an opening of the housing body 42 to isolate an internal environment of the battery cell 200 from an external environment. A shape of the end cover 41 may be adapted to a shape of the housing body 42 to fit and cover the housing body 42. Optionally, the end cover 41 may be made of a material with certain hardness and strength (for example, aluminum alloy), so that the end cover 41 is less likely to deform when subjected to extrusion and collision, allowing the battery cell 200 to have higher structural strength and enhanced safety performance. The end cover 41 may also be made of various materials, such as copper, iron, aluminum, stainless steel, aluminum alloy, and plastic, which are not particularly limited in the embodiments of this application.

The housing body 42 is an assembly configured to fit with the end cover 41 to form the internal environment of the battery cell 200, where the formed internal environment may be configured to accommodate the electrode assembly 30, an electrolyte, and other components. The housing body 42 and the end cover 41 may be separate components, an opening may be provided on the housing body 42, and the end cover 41 covers the opening to form the internal environment of the battery cell 200. The housing body 42 may be of various shapes and sizes, such as a cuboid shape, a cylindrical shape, and a hexagonal prism shape. Specifically, the shape of the housing body 42 may be determined according to a specific shape and size of the battery cell 200. The housing body 42 may be made of various materials, such as copper, iron, aluminum, stainless steel, aluminum alloy, and plastic, which are not particularly limited in the embodiments of this application.

In some embodiments, the end cover 41 may further be provided with a pressure relief mechanism for releasing internal pressure when the internal pressure or a temperature of the battery cell 200 reaches a threshold.

In some embodiments, the battery cell 200 further includes a supporting plate 52, where the supporting plate 52 is mounted in the housing body 42 and can support the bottom of the body portion 31 of the electrode assembly 30, increasing the structural strength of the battery cell 200.

In some embodiments, referring to FIGs. 3 to 5, the end cover 41 is provided with an electrolyte injection hole 402 and an electrode terminal 43. In other words, the end cover 41 is the first wall 401 of the housing 40. This facilitates the processing of the electrolyte injection hole 402 and the mounting of the electrode terminal 43 on the housing 40. It should be understood that one of the other side walls of the housing 40 may also be used as the first wall 401, for example, the bottom of the housing body 42 of the housing 40 may be used as the first wall 401, and the electrolyte injection hole 402 and the electrode terminal 43 are mounted on the bottom of the housing body 42.

The end cover 41 being used as the first wall 401 of the housing 40 involves a relatively simple manufacturing process, and this facilitates the mounting of the electrode terminal 43, as well as the connection between the tab 32 the electrode terminal 43. Therefore, the following embodiments will provide detailed description with the end cover 41 used as the first wall 401 of the housing 40 as an example. When the end cover 41 is used as the first wall 401 of the housing 40, the electrolyte injection hole 402 is provided on the end cover 41, the electrode terminal 43 is mounted on the end cover 41, the surface of the tab 32 facing away from the end cover 41 is the first surface 3201, and the surface of the tab 32 close to the end cover 41 is the second surface 3202.

In some embodiments, referring to FIGs. 3 to 5, the protection sheet 33 shields all of the region, on the body portion 31, corresponding to the electrolyte injection hole 402. To be specific, all of the first region of the body portion 31 is shielded by the protection sheet 33, so that during injection of the electrolyte, the electrolyte only impacts the protection sheet 33 and does not directly flush the body portion 31 of the electrode assembly 30, so as to well protect the body portion 31, further reducing or preventing the risk that the electrode plate or separator of the electrode assembly 30 is broken through during injection of the electrolyte.

It can be understood that the protection sheet 33 may alternatively shield only part of the first region, so that the protection sheet 33 can provide certain blocking and buffering on the electrolyte being injected through the electrolyte injection hole 402, and can also reduce the impact of the electrolyte on the body portion 31 of the electrode assembly 30, so as to protect the body portion 31.

In some embodiments, referring to FIGs. 3 to 6, the tab 32 includes a tab root portion 3232 and a tab body 3231, where the tab body 3231 is connected to the tab root portion 3232, the tab root portion 3232 is connected to the body portion 31, and the tab body 3231 is led out of the tab root portion 3232. The tab body 3231 is electrically connected to the electrode terminal 43 during use. Width of the tab root portion 3232 is greater than width of the tab body 3231, which can enhance the current conducting capability of the tab 32, allowing for thinner tab 32 and reducing space occupied. In addition, this can also enhance the structural strength at the connection between the tab root portion 3232 and the body portion 31. In other words, this enhances the structural strength of the body end surface 311 where the tab 32 is led out of the body portion 31. The tab body 3231 is provided for ease of connection to the first electrode terminal 43 on the first wall 401, facilitating assembly and connection.

In some embodiments, the protection sheet 33 is affixed to the tab root portion 3232 for the tab root portion 3232 to support the protection sheet 33, which can enhance the strength of support to the protection sheet 33, so as to enhance the flushing resistance against the electrolyte.

In some embodiments, referring to FIGs. 3 to 6, the separator of the body portion 31 exceeds the tab root portion 3232 in a direction in which the tab 32 is led out. As shown in the figure, in the height direction of the body portion 31, the separator exceeds the tab root portion 3232 so that the tab root portion 3232 is embedded inside the separator, so as to enhance insulation and isolation, thereby reducing or preventing the risk of short circuit in the body portion 31. In particular, if a plurality of tabs 32 are led out of the body portion 31 and these tabs 32 are stacked to form an entire tab 32, when the plurality of tab root portions 3232 are bent and stacked toward one side, the risk of short circuit of the body portion 31 can be better reduced or avoided, thus improving safety.

In some embodiments, referring to FIGs. 3 to 6, the width of the tab root portion 3232 being set to be greater than the width of the protection sheet 33 can save materials and reduce costs; and the protection sheet 33 with a smaller width being used also facilitates assembly and improves assembly efficiency.

In some embodiments, referring to FIGs. 3 to 6, the first tab 321 is made of a first conductive material, the second tab 322 is made of a second conductive material, electrical conductivity of the first conductive material is less than electrical conductivity of the second conductive material, and the first tab 321 has the tab root portion 3232. The electrical conductivity of the first conductive material for manufacturing the first tab 321 is smaller. Thus, the first tab 321 including the tab root portion 3232 enables the current flow capacity of the first tab 321 to be enhanced. In addition, the first tab 321 can be set to be thinner to reduce space occupied, which in turn increases capacity density of the battery cell 200.

It can be understood that the second tab 322 may also be provided with the tab root portion 3232 to enhance the current flow capacity of the second tab 322, so that when current flow performance (that is, the performance for current flow) of the second tab 322 reaches a set requirement, the second tab 322 can be set to be thinner to reduce the space occupied, which in turn increases the capacity density of the battery cell 200.

In some embodiments, the first tab 321 is a positive tab 32, that is, the positive tab 32 has the tab root portion 3232 for improving the current flow performance of the positive tab 32.

In some embodiments, the first tab 321 may be provided with a protection sheet 33 to protect the first tab 321. Similarly, the second tab 322 may be provided with a protection sheet 33 to protect the second tab 322.

In some embodiments, the electrolyte injection hole 402 is located between two tabs 32 of opposite polarities. To be specific, the electrolyte injection hole 402 is located between the first tab 321 and the second tab 322, such that the protection sheet 33 can be provided on the first tab 321 and the protection sheet 33 shields at least part of the first region on the body portion 31. In addition, it is also possible to provide a protection sheet 33 on the second tab 322 and have the protection sheet 33 on the second tab 322 extend to the region corresponding to the electrolyte injection hole 402. In addition, it is also possible to provide the protection sheet 33 on both the first tab 321 and the second tab 322, and have any one of the protection sheets 33 extend to the region corresponding to the electrolyte injection hole 402. Certainly, it is also possible to have the protection sheets 33 on both the first tab 321 and the second tab 322 extend to the region corresponding to the electrolyte injection hole 402 to cooperate in buffering the electrolyte being injected through the electrolyte injection hole 402. In other words, the electrolyte injection hole 402 being arranged between the two tabs 32 of opposite polarities can facilitate the provision of the protection sheet 33 on any of the tabs 32 and extension of the protection sheet 33 to the region corresponding to the electrolyte injection hole 402, so that during injection of the electrolyte, the flushing to the body portion 31 of the electrode assembly 30 by the electrolyte can be alleviated, thereby facilitating the assembly.

It can be understood that the electrolyte injection hole 402 may alternatively be located on a side of the first tab 321 away from the second tab 322, so that the protection sheet 33 on the first tab 321 can extend to the region corresponding to the electrolyte injection hole 402 for the protection sheet 33 on the first tab 321 to buffer the electrolyte being injected through the electrolyte injection hole 402. Certainly, the electrolyte injection hole 402 may alternatively be located on a side of the second tab 322 away from the first tab 321, so that the protection sheet 33 on the second tab 322 can extend to the region corresponding to the electrolyte injection hole 402 for the protection sheet 33 on the second tab 322 to buffer the electrolyte being injected through the electrolyte injection hole 402.

In some embodiments, referring to FIGs. 3 to 6, the protection sheet 33 and the tab 32 may be connected through adhesion. The protection sheet 33 and the tab 32 being connected through adhesion facilitates both connection and assembly. It can be understood that the protection sheet 33 and the tab 32 are connected through ultrasonic welding. The protection sheet 33 and the tab 32 being connected through ultrasonic welding can enhance the strength of the connection between the protection sheet 33 and the tab 32.

In some embodiments, width D1 of the protection sheet 33 on the first tab 321 is greater than 40 mm, for example, the width D1 of the protection sheet 33 on the first tab 321 may be set to 40 mm, 41 mm, 42 mm, 43 mm, 44 mm, 45 mm, 46 mm, 47 mm, 48 mm, 49 mm, 50 mm, 51 mm, 52 mm, 53 mm, 54 mm, 55 mm, 56 mm, 57 mm, 58 mm, 59 mm, 60 mm, or the like, so as to guarantee the width of the protection sheet 33, facilitating extension of the protection sheet 33 to the region corresponding to the electrolyte injection hole 402. A width D1 direction of the protection sheet 33 is consistent with the width direction of the body portion 31.

In some embodiments, width D2 of the protection sheet 33 on the second tab 322 is greater than 40 mm, for example, the width D2 of the protection sheet 33 on the second tab 322 may be set to 40 mm, 41 mm, 42 mm, 43 mm, 44 mm, 45 mm, 46 mm, 47 mm, 48 mm, 49 mm, 50 mm, 51 mm, 52 mm, 53 mm, 54 mm, 55 mm, 56 mm, 57 mm, 58 mm, 59 mm, 60 mm, or the like, so as to guarantee the width of the protection sheet 33, facilitating extension of the protection sheet 33 to the region corresponding to the electrolyte injection hole 402. A width D2 direction of the protection sheet 33 is consistent with the width direction of the body portion 31.

In some embodiments, referring to FIGs. 3 to 6, the protection sheet 33 includes a first protection sheet 331, where the first protection sheet 331 is affixed to the first surface 3201 of the tab 32. In other words, the protection sheet 33 affixed to the first surface 3201 of the tab 32 is the first protection sheet 331, and the first protection sheet 331 protects the tab 32.

In some embodiments, the first protection sheet 331 shields the first region on the body portion 31 for the first protection sheet 331 to buffer the electrolyte being injected through the electrolyte injection hole 402, thereby alleviating the flushing of the electrolyte to the body end surface 311 of the body portion 31 to protect the body portion 31 of the electrode assembly 30.

In some embodiments, the first protection sheet 331 extends from the body end surface 311 of the body portion 31 to the first side surface 3121, which can not only enhance the structural strength of the connection between the first protection sheet 331 and the body portion 31, but also better protect the body end surface 311 of the body portion 31, avoiding or alleviating the flushing of the electrolyte to the body end surface 311 of the body portion 31. The first protection sheet 331 extends from the body end surface 311 of the body portion 31 to the first side surface 3121 to protect the connection between the body end surface 311 and the first side 3121, so as to alleviate the flushing of the electrolyte to an edge of the body end surface 311 close to the first side surface 3121, thus better protecting the body portion 31.

In some embodiments, the first protection sheet 331 may be affixed to the tab root portion 3232 of the first tab 321 to enhance the strength of support to the first protection sheet 331 through the tab root portion 3232, thereby enhancing the flushing resistance of the first protection sheet 331 against the electrolyte.

In some embodiments, referring to FIGs. 3 to 6, the first protection sheet 331 covers the first surface 3201 of the tab 32. The first protection sheet 331 being made to cover the first surface 3201 of the tab 32 can better protect the tab 32 and enhance the structural strength of the connection between the first protection sheet 331 and the tab 32.

In some embodiments, referring to FIGs. 3, 6, and 7, if the battery cell 200 includes the current collecting member 51, when the current collecting member 51 connects the tab 32 and the corresponding electrode terminal 43, the current collecting member 51 may be connected to the second surface 3202 of the tab 32, facilitating electrical connection between the tab 32 and the electrode terminal 43.

In some embodiments, referring to FIG. 3, the electrode assembly 30 further includes an insulating sheet 34, the insulating sheet 34 wrapping around the body portion 31 to bind the body portion 31 of the electrode assembly 30 and well protect the body portion 31.

In some embodiments, the battery cell 200 includes two electrode assemblies 30, where the insulating sheet 34 wraps around the body portions 31 of the two electrode assemblies 30 to bind the body portions 31 of the two electrode assemblies 30. This facilitates installation and can provide good protection for the body portions 31 of the two electrode assemblies 30. It can be understood that the insulating sheet 34 can be wrapped around each of the body portions 31 separately. Certainly, when the battery cell 200 includes a greater quantity of electrode assemblies 30, the body portions 31 of the plurality of electrode assemblies 30 may be wrapped together to facilitate assembly.

In some embodiments, the battery cell 200 includes two electrode assemblies 30, where the two electrode assemblies 30 are divided into two groups, with each group having one electrode assembly. When the battery cells 200 are provided in a greater quantity, the electrode assemblies may also be divided into two groups, with each group having one or more electrode assemblies 30. A plurality of electrode assemblies 30 being used can increase the capacity density of the battery cell 200, and also facilitates the processing and manufacturing of the electrode assemblies 30.

In some embodiments, the battery cell 200 includes two electrode assemblies 30, where the tabs 32 of the two electrode assemblies 30 are each provided with a protection sheet 33, and in particular, the two tabs 32 adjacent to the electrolyte injection hole 402 are provided with the protection sheets 33 so that the protection sheets 33 can extend to the region corresponding to the electrolyte injection hole 402. If the two first tabs 321 adjacent to the electrolyte injection hole 402 are provided with the protection sheets 33, each of the protection sheets 33 can extend to a region, on a corresponding body portion 31, corresponding to the electrolyte injection hole 402 to protect the corresponding body portion 31, and the protection sheets 33 on the two first tabs 321 adjacent to the electrolyte injection hole 402 can be made to cooperate to shield the first regions on the body portions 31.

In some embodiments, the battery cell 200 includes two electrode assemblies 30, and during injection of the electrolyte, the electrolyte impacts the positions on the two electrode assemblies 30 adjacent to the electrolyte injection hole 402. The protection sheets 33 are provided on the tabs 32, of the two electrode assemblies 30, adjacent to the electrolyte injection hole 402, so that the protection sheets 33 can be made to better shield the region corresponding to the electrolyte injection hole 402, that is, the protection sheets 33 are made to better shield the first regions on the body portions 31, so as to protect the body portions 31 of the electrode assemblies 30. For example, the first tabs 321 of the two electrode assemblies 30 of the battery cell 200 are disposed adjacent to the electrolyte injection hole 402, the first tabs 321 are provided with the protection sheets 33, and the protection sheets 33 are made to shield the first regions on the corresponding body portions 31, so as to protect the body portions 31 and first tabs 321 of the electrode assemblies 30. It can be understood that when the second tab 322 of the electrode assembly 30 is disposed adjacent to the electrolyte injection hole 402, the second tab 322 may also be provided with the protection sheet 33 such that the protection sheet 33 on the second tab 322 shields the first region.

In some embodiments, the first surfaces 3201 of the two tabs 32 adjacent to the electrolyte injection hole 402 are affixed with the protection sheets 33, and the protection sheets 33 shield regions that are on the body portions 31 of the electrode assemblies 30 in which the protection sheets 33 are located and correspond to the electrolyte injection hole 402. In other words, the protection sheets 33 are made to shield the first regions on the body portions 31 of the electrode assemblies 30 in which the protection sheets 33 are located. For example, the first tabs 321 of the two electrode assemblies 30 of the battery cell 200 are disposed adjacent to the electrolyte injection hole 402, and the first surfaces 3201 of the first tabs 321 are affixed with the first protection sheets 331 for the first protection sheets 331 to protect the first tabs 321 and buffer the electrolyte being injected through the electrolyte injection hole 402, so as to protect the body portions 31 of the electrode assemblies 30.

In some embodiments, the protection sheets 33 may be separately provided on the tabs 32 of the electrode assemblies 30, and area of each protection sheet 33 may be made to be smaller, conducive to saving materials and reducing costs, and the protection sheet 33 with smaller area being used also facilitates mounting of the protection sheet 33. For example, the first protection sheets 331 are affixed to the first tabs 321 of the two electrode assemblies 30 respectively, so that the area of each first protection sheet 331 can be set to be smaller to save materials and facilitate assembly.

In some embodiments, referring to FIGs. 3 to 6, the first wall 401 of the housing 40 is provided with a shield plate 403. When the end cover 41 serves as the first wall 401, the end cover 41 is provided with the shield plate 403, and the shield plate 403 shields the electrolyte injection hole 402, which can buffer the electrolyte being injected through the electrolyte injection hole 402, so as to alleviate the impact force of the electrolyte during injection of the electrolyte.

For ease of description, an end of the protection sheet 33 away from the body portion 31 is defined as a far end 330.

In some embodiments, referring to FIGs. 3 to 6, the far end 330 of the protection sheet 33 adjacent to the electrolyte injection hole 402 is located on a side of the shield plate 403. To be specific, the far ends 330 of the two protection sheets 33 adjacent to the electrolyte injection hole 402 are apart from each other, and the shield plate 403 is located between the far ends 330 of the two protection sheets 33 adjacent to the electrolyte injection hole 402, so that the protection sheet 33 can buffer the electrolyte being injected through the electrolyte injection hole 402, and space utilization in the housing 40 can also be increased, so as to increase the capacity density of the battery cell 200. In addition, such structure can prevent the protection sheet 33 from being elongated to break when two groups of electrode assemblies 30 are brought close to form a cell, and can also prevent the shield plate 403 from bursting the protection sheet 33.

In some embodiments, referring to FIGs. 3 to 5, when the tab 32 is provided with the first protection sheet 331, the far ends 330 of the two first protection sheets 331 adjacent to the electrolyte injection hole 402 are located on the sides of the shield plate 403 to reduce the space occupied, improving the space utilization in the housing 40, and thereby increasing the capacity density of the battery cell 200. In addition, for such structure, the far end 330 of the first protection sheet 331 is located on the side of the shield plate 403 and the shield edge does not burst the first protection sheet 331, ensuring good connection between the first protection sheet 331 and the first tab 321 due, and guaranteeing the structural strength of the connection.

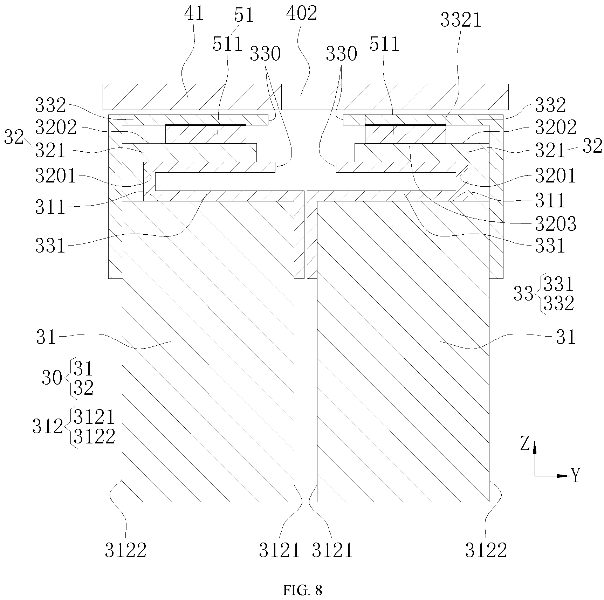

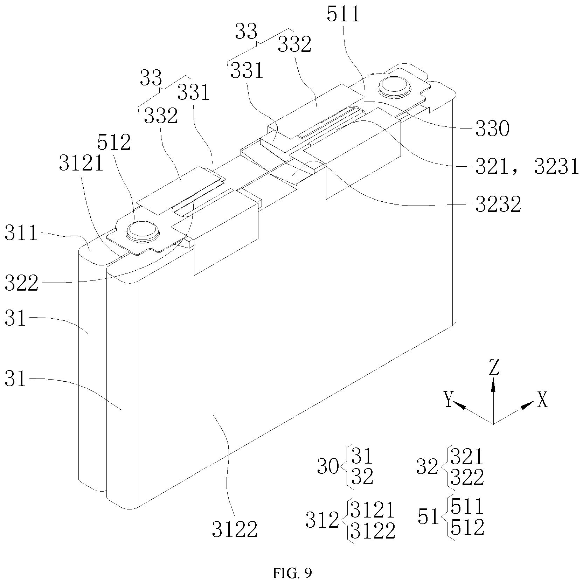

Referring to FIGs. 8 and 9, FIG. 8 is a schematic structural cross-sectional view of a battery cell 200 according to some embodiments of this application, where the section runs through the electrolyte injection hole 402, and the section is parallel to a plane defined by the height direction and thickness direction of the body portion 31. FIG. 9 is a schematic structural diagram of a portion of an electrode assembly 30 in a battery cell 200 according to some embodiments of this application.

In some embodiments, the protection sheet 33 includes a second protection sheet 332, where the second protection sheet 332 is affixed to the second surface 3202 of the tab 32. In other words, the protection sheet 33 affixed to the second surface 3202 of the tab 32 is the second protection sheet 332, and the second protection sheet 332 protects the tab 32.

In the description of these embodiments, unless otherwise specified, the term "protection sheet" may refer to the first protection sheet 331, the second protection sheet 332, or both the first protection sheet 331 and the second protection sheet 332. The first protection sheet 331 is a protection sheet 33 disposed on the first surface 3201 of the tab 32, and the second protection sheet 332 is a protection sheet 33 disposed on the second surface 3202 of the tab 32.

In some embodiments, the second surface 3202 of the tab 32 is connected to the current collecting member 51, and the second surface 3202 of the tab 32 has a connection region 3203, the connection region 3203 being a region connected to the current collecting member 51. The second protection sheet 332 and the connection region 3203 are staggered to prevent the second protection sheet 332 from interfering with the connection between the tab 32 and the current collecting member 51.

In some embodiments, the second protection sheet 332 has an extension portion 3321, where the extension portion 3321 extends to a position, corresponding to the connection region 3203, on a surface of the current collecting member 51 facing away from the tab 32. The extension portion 3321 is provided on the second protection sheet 332 to extend to the position, of the current collecting member 51, corresponding to the connection region 3203, so that the current collecting member 51 can be protected, and the structural strength of connection of the second protection sheet 332 can be enhanced. In addition, the extension portion 3321 is provided on the second protection sheet 332, so that after the tab 32 is connected to the current collecting member 51, an entire protection sheet 33 can be used to affix to the current collecting member 51 and the second surface 3202 of the tab 32 for easy assembly.

In some embodiments, referring to FIGs. 8 and 9, the first protection sheet 331 and the second protection sheet 332 may be respectively provided on two surfaces of one tab 32 for the first protection sheet 331 and the second protection sheet 332 to cooperate and protect the tab 32.

In some embodiments, the second protection sheet 332 can be made to shield the first region on the body portion 31, so that during injection of the electrolyte, the second protection sheet 332 can buffer the electrolyte being injected to alleviate the flushing to the body portion 31, thus well protecting the body portion 31.

In some embodiments, the second protection sheet 332 extending to the second side surface 3122 can enhance the structural strength of the connection between the second protection sheet 332 and the body portion 31, and can protect the connection between the tab 32 and the body portion 31. In addition, when the tab 32 is led out of a middle region on the body end surface 311 of the body portion 31 in the thickness direction of the body portion 31, that is, when the tab 32 is apart from the second side surface 3122, the second protection sheet 332 also shields the region, on the body end surface 311 of the body portion 31, between the tab 32 and the second side surface 3122 to protect the region, on the body end surface 311, between the tab 32 and the second side surface 3122, thereby avoiding or alleviating the flushing of the electrolyte to this region, so as to better protect the body portion 31.

In some embodiments, the battery cell 200 includes two electrode assemblies 30, the end cover 41 is provided with the shield plate 403, the shield plate 403 shields the electrolyte injection hole 402, and the far end 330 of the second protection sheet 332 adjacent to the electrolyte injection hole 402 is located on a side of the shield plate 403. To be specific, the far ends 330 of the two second protection sheets 332 adjacent to the electrolyte injection hole 402 are apart from each other, and the shield plate 403 is located between the far ends 330 of the two second protection sheets 332 adjacent to the electrolyte injection hole 402, so as to increase the space utilization in the housing 40 and increase the capacity density of the battery cell 200. In addition, such structure can prevent the second protection sheet 332 from being elongated to break when two groups of electrode assemblies 30 are brought close to form a cell, and can also prevent the shield plate 403 from bursting the second protection sheet 332.

In some embodiments, when the second protection sheet 332 has great strength, it is also possible to press the far end 330 of the second protection sheet 332 against the body end surface 311 of the body portion 31 using the shield plate 403, or affix the far end 330 of the second protection sheet 332 to the body portion 31, so as to stably support the second protection sheet 332.

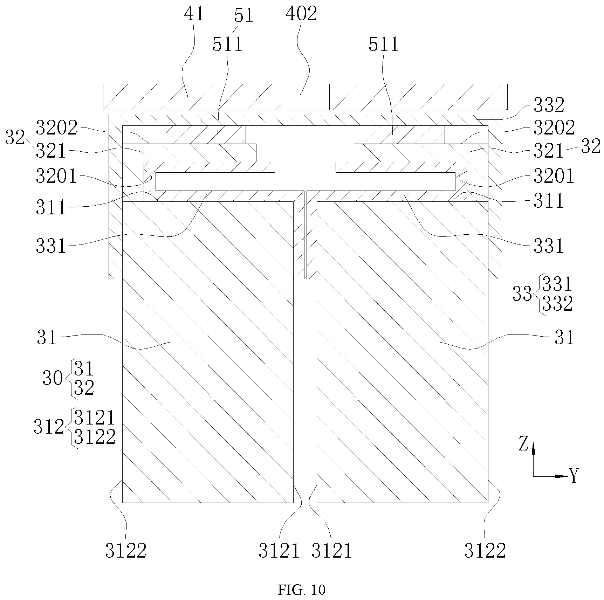

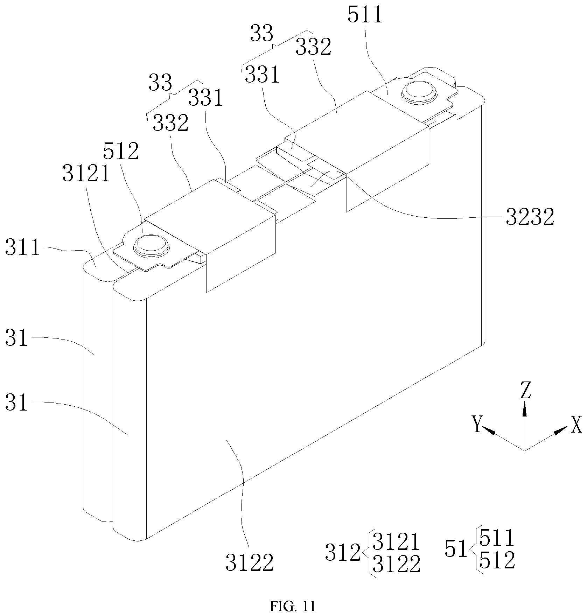

Referring to FIGs. 10 and 11, FIG. 10 is a schematic structural cross-sectional view of a battery cell 200 according to some embodiments of this application, where the section runs through the electrolyte injection hole 402, and the section is parallel to a plane defined by the height direction and thickness direction of the body portion 31. FIG. 11 is a schematic structural diagram of a portion of an electrode assembly 30 in a battery cell 200 according to some embodiments of this application.

In some embodiments, the battery cell 200 includes two electrode assemblies 30, and the second protection sheets 332 on the first tabs 321 of the two electrode assemblies 30 are of a one-piece structure. For example, an entire protection sheet 33 can be used to connect the two first tabs 321. Certainly, the second protection sheets 332 on the two first tabs 321 can be connected to facilitate mounting of the second protection sheet 332 on the first tab 321.

In some embodiments, the battery cell 200 includes two electrode assemblies 30, and the second protection sheets 332 on the second tabs 322 of the two electrode assemblies 30 are of a one-piece structure. For example, an entire protection sheet 33 can be used to connect the two second tabs 322. Certainly, the second protection sheets 332 on the two second tabs 322 can be connected to facilitate mounting of the second protection sheet 332 on the second tab 322.

In some embodiments, the battery cell 200 includes two electrode assemblies 30, and the two second protection tabs 332 adjacent to the electrolyte injection hole 402 are connected to form a one-piece structure, so that the second protection sheets 332 can be made to shield the region corresponding to the electrolyte injection hole 402. To be specific, the second protection tabs 332 are made to shield the first regions to alleviate the impact of the electrolyte, so as to protect the body portion 31 of the electrode assembly 30.

In some embodiments, when the second protection sheets 332 of the two tabs 32 adjacent to the electrolyte injection hole 402 are of a one-piece structure, and the two tabs 32 adjacent to the electrolyte injection hole 402 are provided with the first protection sheets 331, the first protection sheets 331 and the second protection sheets 332 can cooperate to buffer the impact of the electrolyte being injected, so as to better protect the body portions 31 of the two electrode assemblies 30.

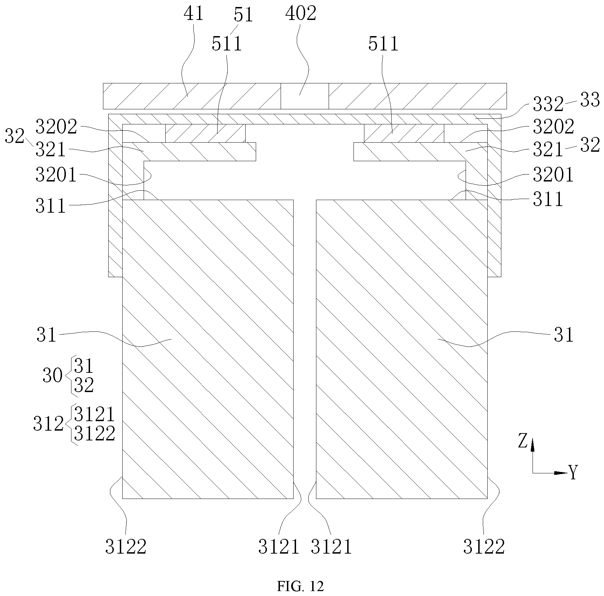

Referring to FIG 12, FIG. 12 is a schematic structural cross-sectional view of a battery cell 200 according to some embodiments of this application, where the section runs through the electrolyte injection hole 402, and the section is parallel to a plane defined by the height direction and thickness direction of the body portion 31.

In some embodiments, the battery cell 200 includes two electrode assemblies 30, and the second protection sheet 332 may be provided only on the tabs 32 of the two electrode assemblies 30. The two second protection sheets 332 of the two tabs 32 adjacent to the electrolyte injection hole 402 are arranged as a one-piece structure to cover the regions, on the body portion 31, corresponding to the electrolyte injection hole 402. To be specific, the second protection tabs 332 are made to shield the first regions to alleviate the impact of the electrolyte, so as to protect the body portions 31 of the electrode assemblies 30.

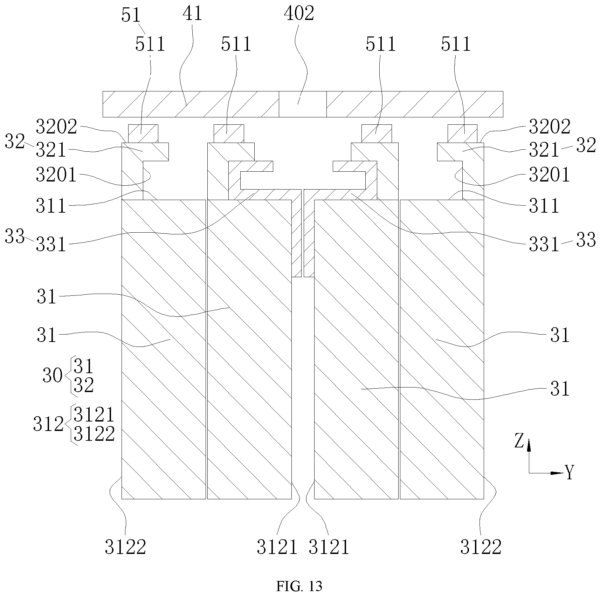

Referring to FIG 13, FIG. 13 is a schematic structural cross-sectional view of a battery cell 200 according to some embodiments of this application, where the section runs through the electrolyte injection hole 402, and the section is parallel to a plane defined by the height direction and thickness direction of the body portion 31.

In some embodiments, the battery cell 200 includes a plurality of electrode assemblies 30, where the plurality of electrode assemblies 30 are divided into two groups. For example, when the battery cell 200 includes four electrode assemblies 30, each group may include two electrode assemblies 30. Certainly, when two battery cells 200 are provided and divided into two groups, each group may include one electrode assembly 30. When three battery cells 200 are provided and divided into two groups, one group may include one electrode assembly 30, and the other group includes two electrode assemblies 30. In other words, when the battery cell 200 includes a plurality of electrode assemblies 30, where the plurality of electrode assemblies 30 are divided into two groups, each group may include one or more electrode assemblies 30. A plurality of electrode assemblies 30 being used can increase the capacity density of the battery cell 200, and also facilitates the processing and manufacturing of the electrode assemblies 30.

In some embodiments, when the battery cell 200 includes a plurality of electrode assemblies 30, the tabs 32 of two electrode assemblies 30 adjacent to the electrolyte injection hole 402 are each provided with the protection sheet 33. The protection sheets 33 being provided on the tabs 32 of the two electrode assemblies 30 adjacent to the electrolyte injection hole 402 can save materials and reduce costs. In addition, because the two electrode assemblies 30 adjacent to the electrolyte injection hole 402 are more susceptible to the impact of the electrolyte during injection of the electrolyte, the protection sheets 33 being provided on the tabs 32 of the two electrode assemblies 30 can better allow the protection sheet 33 to shield the region corresponding to the electrolyte injection hole 402, so as to protect the body portions 31 of the electrode assemblies 30.

In some embodiments, when the battery cell 200 includes a plurality of electrode assemblies 30, the first surfaces 3201 of the tabs 32 of two electrode assemblies 30 adjacent to the electrolyte injection hole 402 may each be provided with the first protection sheet 331 to protect the corresponding tabs 32. The first protection sheet 331 shields the first region on the body portion 31 of the electrode assembly 30 on which the first protection sheet 331 is located. When the first protection sheet 331 is used to shield the region corresponding to the electrolyte injection hole 402, the first protection sheet 331 with a smaller area can be used to save materials and reduce costs, and also facilitate mounting of the first protection sheet 331 due to the reduced area of the first protection sheet 331 used.

In some embodiments, the first protection sheets 331 of the two electrode assemblies 30 adjacent to the electrolyte injection hole 402 extend from the body end surfaces 311 of the corresponding body portions 31 to the first side surfaces 3121 of the body portions 31, so that the two first protection sheets 331 can cooperate to shield the first regions on the two adjacent body portions 31, so as to alleviate the impact of the electrolyte being injected on the body portions 31, thus well protecting of the body portions 31.

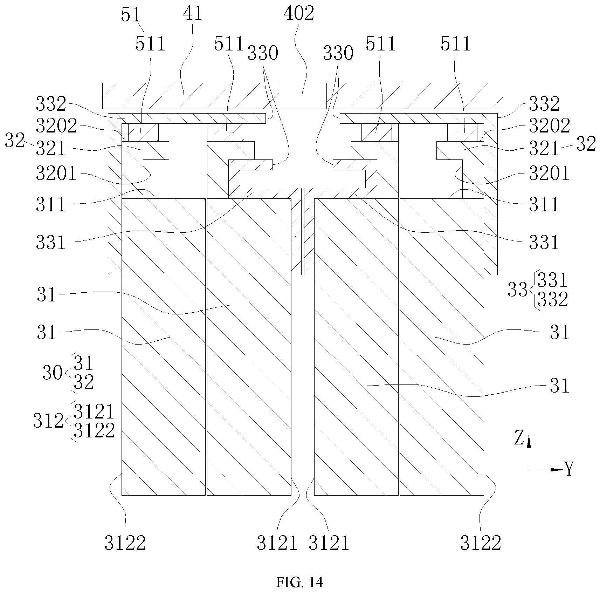

Referring to FIG 14, FIG. 14 is a schematic structural cross-sectional view of a battery cell 200 according to some embodiments of this application, where the section runs through the electrolyte injection hole 402, and the section is parallel to a plane defined by the height direction and thickness direction of the body portion 31.

In some embodiments, when the battery cell 200 includes a plurality of electrode assemblies 30, the plurality of electrode assemblies 30 are divided into two groups, and the first surfaces 3201 of the tabs 32 of two electrode assemblies 30 adjacent to the electrolyte injection hole 402 are each provided with the first protection sheet 331 to shield the region corresponding to the electrolyte injection hole 402, so as to protect the body portion 31 of the electrode assembly 30.

In some embodiments, the second surfaces 3202 of the tabs 32 of the electrode assemblies 30 in each group may be provided with the second protection sheet 332, and the tabs 32 of same polarity of the electrode assemblies 30 in each group may be provided with one second protection sheet 332. For example, the first tabs 321 of the plurality of electrode assemblies 30 in each group are connected to a same second protection sheet 332. Certainly, the second tabs 322 of the plurality of electrode assemblies 30 in each group may also be connected to a same second protection sheet 332. The second protection sheet 332 protects corresponding tabs 32.

In some embodiments, the end cover 41 is provided with the shield plate 403, the shield plate 403 shields the electrolyte injection hole 402, and the far end 330 of the second protection sheet 332 adjacent to the electrolyte injection hole 402 is located on a side of the shield plate 403. In this way, the shield plate 403 extends between the far ends 330 of the two second protection sheets 332 adjacent to the electrolyte injection hole 402, so as to increase the space utilization in the housing 40 and increase the capacity density of the battery cell 200.

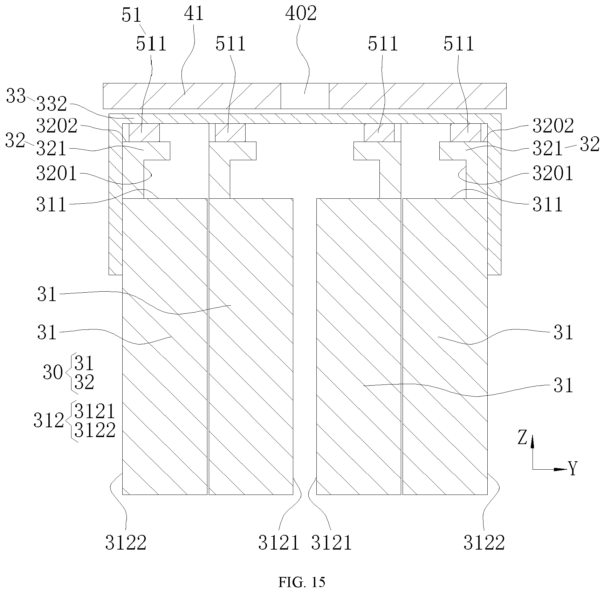

Referring to FIG 15, FIG. 15 is a schematic structural cross-sectional view of a battery cell 200 according to some embodiments of this application, where the section runs through the electrolyte injection hole 402, and the section is parallel to a plane defined by the height direction and thickness direction of the body portion 31.

In some embodiments, when the battery cell 200 includes a plurality of electrode assemblies 30, the second surfaces 3202 of the tabs 32 of same polarity of the electrode assemblies 30 are connected a same second protection sheet 332. To be specific, the second protection sheet 332 of the second surfaces 3202 of the tabs 32 are connected to the corresponding tabs 32 of the electrode assemblies 30, facilitating mounting of the second protection sheet 332.

In some embodiments, the second protection sheet 332 may extend to the electrolyte injection hole 402 to shield regions, corresponding to the electrolyte injection hole 402, on the two body portions 31 adjacent to the electrolyte injection hole 402. For example, the second protection sheet 332 corresponding to one of the two tabs 32 of opposite polarities of the electrode assembly 30 may extend to the electrolyte injection hole 402 to shield the region, on the body portion 31, corresponding to the electrolyte injection hole 402. Certainly, when the electrolyte injection hole 402 is located between the two tabs 32 of opposite polarities of the electrode assembly 30, it is also possible that the second protection sheets 332 corresponding to the two tabs 32 of opposite polarities of the electrode assembly 30 both extend to the electrolyte injection hole 402 to shield the first region on the body portion 31.

In some embodiments, the second protection sheet 332 extends to the electrolyte injection hole 402 to shield the first region on the body portion 31, and the second protection sheet 332 is connected to the tabs 32 of same polarity. In this way, the second protection sheet 332 can be better supported, and the impact resistance of the second protection sheet 332 can be improved, thus batter alleviating the impact of the electrolyte being injected through the electrolyte injection hole 402, so as to protect the body portion 31 of the electrode assembly 30.

In some embodiments, the battery cell 200 includes a plurality of electrode assemblies 30 that are divided into two groups. When the second surfaces 3202 of the tabs 32 of same polarity of the plurality of electrode assemblies 30 are connected to a same second protection sheet 332, since the two groups of electrode assemblies 30 are stacked together to form a cell, an end of the second protection sheet 332 extends to the two electrode assemblies 30 that are at the outermost side. In this way, the end of the second protection sheet 332 extends to the second side surface 3122 of the body portion 31 of the corresponding electrode assembly 30, so as to stabilize the second protection sheet 332.

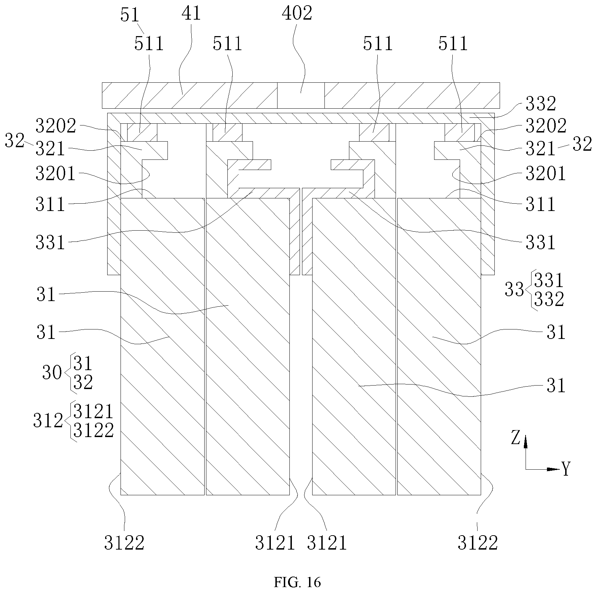

Referring to FIG 16, FIG. 16 is a schematic structural cross-sectional view of a battery cell 200 according to some embodiments of this application, where the section runs through the electrolyte injection hole 402, and the section is parallel to a plane defined by the height direction and thickness direction of the body portion 31.

In some embodiments, when the battery cell 200 includes a plurality of electrode assemblies 30, the first surfaces 3201 of the tabs 32 of two electrode assemblies 30 adjacent to the electrolyte injection hole 402 are each provided with the first protection sheet 331, and the first protection sheet 331 shields the first region on the body portion 31 of the electrode assembly 30 on which the first protection sheet 331 is located. The second surfaces 3202 of the tabs 32 of same polarity of the electrode assemblies 30 are connected to a same second protection sheet 332, and the second protection sheet 332 extends to the electrolyte injection hole 402 to shield the first regions on the two body portions 31 adjacent to the electrolyte injection hole 402. In this way, the first protection sheet 331 and the second protection sheet 332 can cooperate to alleviate the impact of the electrolyte being injected through the electrolyte injection hole 402 and protect the body portion 31 of the electrode assembly 30. In addition, the first protection sheet 331 with a smaller area can be used to save materials and reduce costs, and also facilitate mounting of the first protection sheet 331. The second protection sheet 332 is connected to the second surfaces 3202 of the tabs 32 of same polarity corresponding to the electrode assemblies 30 to facilitate mounting of the second protection sheet 332.

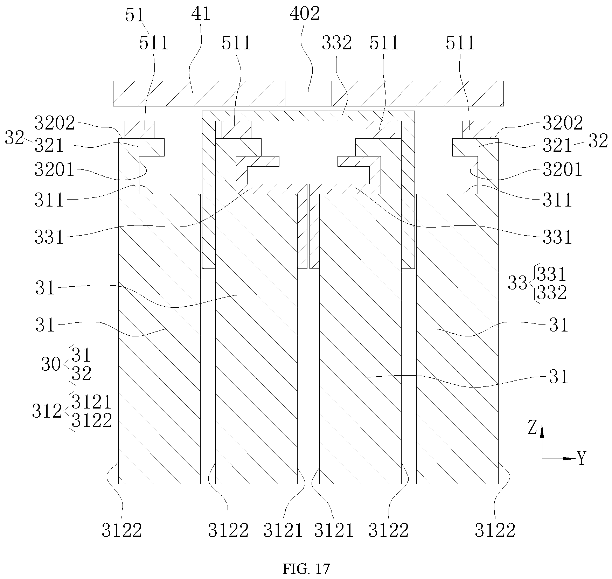

Referring to FIG 17, FIG. 17 is a schematic structural cross-sectional view of a battery cell 200 according to some embodiments of this application, where the section runs through the electrolyte injection hole 402, and the section is parallel to a plane defined by the height direction and thickness direction of the body portion 31.

In some embodiments, the battery cell 200 includes a plurality of electrode assemblies 30, and the plurality of electrode assemblies 30 are divided into two groups. The second surfaces 3202 of the tabs 32 of two electrode assemblies 30 adjacent to the electrolyte injection hole 402 are provided with second protection sheets 332, and the second protection sheets 332 on the two tabs 32 are of a one-piece structure. In other words, the second faces 3202 of the two tabs 32 are connected to a same second protection sheet 332. In this way, the second protection sheet 332 with a smaller area can be used to save materials and reduce costs.

In some embodiments, an end of the second protection sheet 332 extends to the second side surface 3122 of the body portion 31 adjacent to the end, so as to stabilize the second protection sheet 332.

In some embodiments, as shown in FIGs. 16 and 17, when the battery cell 200 includes a plurality of electrode assemblies 30, and the second surfaces 3202 of two tabs 32 adjacent to the electrolyte injection hole 402 are connected to a same second protection sheet 332, an end of the second protection sheet 332 extends to the second side surface 3122 of the body portion 31 adjacent to the end, so as to enhance the strength of the connection between the second protection sheet 332 and the corresponding body portion 31, and well protect the second surface 3202 of the tab 32.

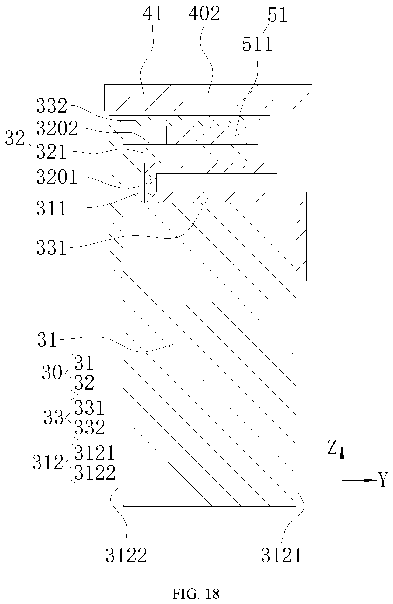

Referring to FIG 18, FIG. 18 is a schematic structural cross-sectional view of a battery cell 200 according to some embodiments of this application, where the section runs through the electrolyte injection hole 402, and the section is parallel to a plane defined by the height direction and thickness direction of the body portion 31.

In some embodiments, the battery cell 200 includes one electrode assembly 30, and the first surface 3201 of the tab 32 of the electrode assembly 30 is provided with a first protection sheet 331 for the first protection sheet 331 to protect the first surface 3201 of the tab 32. The first protection sheet 331 can be made to shield the first region on the body portion 31 for the first protection sheet 331 to buffer the electrolyte being injected through the electrolyte injection hole 402, thereby alleviating the flushing of the electrolyte to the body end surface 311 of the body portion 31 to protect the body portion 31 of the electrode assembly 30.

In some embodiments, the first protection sheet 331 extends from the body end surface 311 of the body portion 31 to the first side surface 3121, so as to enhance the structural strength of the connection between the first protection sheet 331 and the body portion 31, and also better protect the body end surface 311 of the body portion 31, avoiding or alleviating the flushing of the electrolyte to the body end surface 311 of the body portion 31.

In some embodiments, the battery cell 200 includes one electrode assembly 30, and the second surface 3202 of the tab 32 of the electrode assembly 30 is provided with a second protection sheet 332 for the second protection sheet 332 to protect the second surface 3202 of the tab 32. The second protection sheet 332 can be made to shield the region corresponding to the electrolyte injection hole 402 for the first protection sheet 332 to buffer the electrolyte being injected through the electrolyte injection hole 402, thereby alleviating the flushing of the electrolyte to the tab 32 and the body portion 31.

In some embodiments, the second protection sheet 332 extends to the second side surface 3122 to enhance the structural strength of the connection between the second protection sheet 332 and the body portion 31.

In some embodiments, the battery cell 200 includes one electrode assembly 30. The first surface 3201 of the tab 32 may be provided with a first protection sheet 331, and the second surface 3202 of the tab 32 may be provided with a second protection sheet 332 at the same time. The first protection sheet 331 shields the first region on the body portion 31, and the second protection sheet 332 shields the region corresponding to the electrolyte injection hole 402, so that the first protection sheet 331 and the second protection sheet 332 cooperate to buffer the electrolyte being injected through the electrolyte injection hole 402, thus enhancing buffering capability against the electrolyte being injected, so as to better protect the body portion 31 of the electrode assembly 30.

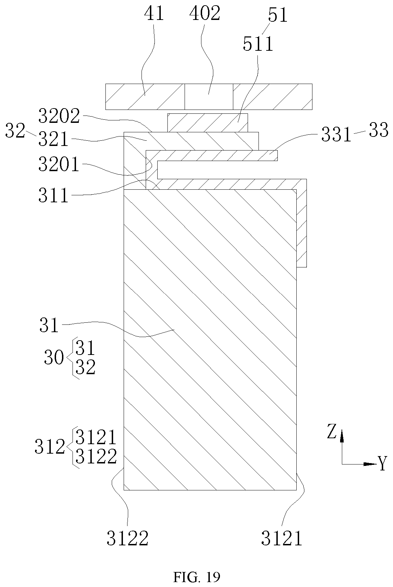

Referring to FIG 19, FIG. 19 is a schematic structural cross-sectional view of a battery cell 200 according to some embodiments of this application, where the section runs through the electrolyte injection hole 402, and the section is parallel to a plane defined by the height direction and thickness direction of the body portion 31.

In some embodiments, the battery cell 200 includes one electrode assembly 30, and only the first surface 3201 of the tab 32 of the electrode assembly 30 is provided with a first protection sheet 331. The first protection sheet 331 shields the first region on the body portion 31 for the first protection sheet 331 to buffer the electrolyte being injected through the electrolyte injection hole 402, thereby alleviating the flushing of the electrolyte to the body end surface 311 of the body portion 31 to protect the body portion 31 of the electrode assembly 30. Moreover, the first protection sheet 331 protects the first surface 3201 of the tab 32. In addition, only the first surface 3201 of the tab 32 being provided with the first protection sheet 331 can also save materials and reduce costs.

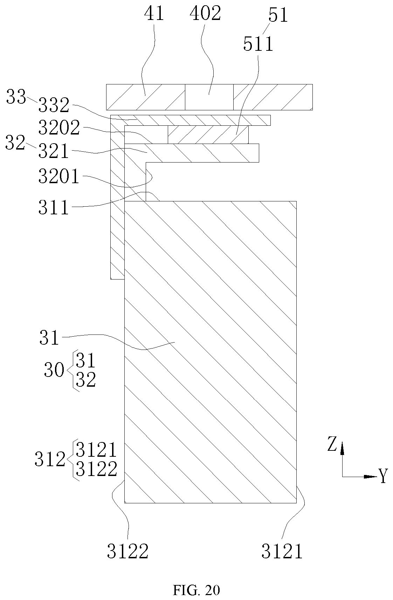

Referring to FIG 20, FIG. 20 is a schematic structural cross-sectional view of a battery cell 200 according to some embodiments of this application, where the section runs through the electrolyte injection hole 402, and the section is parallel to a plane defined by the height direction and thickness direction of the body portion 31.

In some embodiments, the battery cell 200 includes one electrode assembly 30, and only the second surface 3202 of the tab 32 of the electrode assembly 30 is provided with a second protection sheet 332. The second protection sheet 332 shields the region corresponding to the electrolyte injection hole 402 for the second protection sheet 332 to buffer the electrolyte being injected through the electrolyte injection hole 402, thereby alleviating the flushing of the electrolyte to the tab 32 and the body portion 31. In addition, only the second surface 3202 of the tab 32 being provided with the second protection sheet 332 can also save materials and reduce costs.

According to some embodiments of this application, this application further provides a battery including the battery cell described in any one of the foregoing solutions.

According to some embodiments of this application, this application further provides an electric apparatus including the battery described in any one of the foregoing solutions.

The electric apparatus may be any one of the foregoing devices or systems using a battery.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification, but includes all technical solutions falling within the scope of the claims.

## Claims

1. A battery cell, **characterized by** comprising:
an electrode assembly comprising a body portion and a tab, wherein the body portion has a body end surface, and the tab is led out of the body end surface; and
a housing having a first wall, wherein the first wall is provided with an electrolyte injection hole and an electrode terminal, and the tab is electrically connected to the electrode terminal; wherein
the body portion has a first region corresponding to the electrolyte injection hole, and at least one surface of the tab is provided with a protection sheet, the protection sheet shielding at least part of the first region.

2. The battery cell according to claim 1, **characterized in that** the protection sheet shields all of the first region.

3. The battery cell according to claim 1 or 2, **characterized in that** the tab comprises a tab root portion connected to the body portion and a tab body led out of the tab root portion, wherein width of the tab root portion is greater than width of the tab body, and the protection sheet is affixed to the tab root portion.

4. The battery cell according to claim 3, **characterized in that** a separator of the body portion exceeds the tab root portion in a direction in which the tab is led out.

5. The battery cell according to claim 3 or **4, characterized in that** the width of the tab root portion is greater than width of the protection sheet.

6. The battery cell according to any one of claims 3 to 5, **characterized in that** the electrode assembly comprises a first tab and a second tab of opposite polarities, wherein the first tab is made of a first conductive material, the second tab is made of a second conductive material, electrical conductivity of the first conductive material is less than electrical conductivity of the second conductive material, and the first tab has the tab root portion.

7. The battery cell according to any one of claims 1 to 6, **characterized in that** the electrode assembly comprises two tabs of opposite polarities, wherein the electrolyte injection hole is located between the two tabs, at least one of the tabs is provided with the protection sheet, and at least one protection sheet shields at least part of the first region.

8. The battery cell according to any one of claims 1 to 7, **characterized in that** the tab has a first surface, the first surface being a surface of the tab facing away from the first wall; the protection sheet comprises a first protection sheet affixed to the first surface, the first protection sheet shielding the first region; and the body portion has a first side surface adjacent to the body end surface; wherein the first protection sheet extends from the body end surface of the body portion to the first side surface.

9. The battery cell according to claim 8, **characterized in that** the first protection sheet covers the first surface of the tab.

10. The battery cell according to any one of claims 1 to 9, **characterized in that** the tab has a second surface, the second surface being a surface of the tab close to the first wall; and the battery cell further comprises a current collecting member connecting the second surface and the electrode terminal.

11. The battery cell according to claim 10, **characterized in that** the protection sheet comprises a second protection sheet disposed on the second surface, and the second surface has a connection region connected to the current collecting member, with the second protection sheet and the connection region staggered.

12. The battery cell according to claim 11, **characterized in that** the second protection sheet has an extension portion, wherein the extension portion extends to a position, corresponding to the connection region, on a surface of the current collecting member facing away from the tab.

13. The battery cell according to claim 11 or 12, **characterized in that** the second protection sheet shields the first region.

14. The battery cell according to any one of claims 11 to 13, **characterized in that** the body portion has a second side surface adjacent to the body end surface; and the second protection sheet extends to the second side surface.

15. The battery cell according to any one of claims 1 to **14, characterized in that** the battery cell comprises a plurality of electrode assemblies, wherein the plurality of electrode assemblies are divided into two groups, and the tabs of two electrode assemblies adjacent to the electrolyte injection hole are each provided with the protection sheet.

16. The battery cell according to claim 15, **characterized in that** the protection sheets are affixed to surfaces, facing away from the first wall, of the two tabs adjacent to the electrolyte injection hole, and the protection sheet shields the first region on the body portion of the electrode assembly in which the protection sheet is located.

17. The battery cell according to claim 15 or 16, **characterized in that** the first wall is provided with a shield plate shielding the electrolyte injection hole, and an end, away from the body portion, of the protection sheet adjacent to the electrolyte injection hole is located on a side of the shield plate.

18. The battery cell according to any one of claims 15 to 17, **characterized in that** the protection sheets are disposed on surfaces, close to the first wall, of the tabs of the two electrode assemblies adjacent to the electrolyte injection hole.

19. The battery cell according to claim 18, **characterized in that** the protection sheets corresponding to the surfaces, close to the first wall, of the two tabs adjacent to the electrolyte injection hole are of a one-piece structure.

20. The battery cell according to claim 19, **characterized in that** the protection sheets corresponding to the surfaces of the tabs close to the first wall are connected to corresponding tabs of the electrode assemblies.

21. The battery cell according to any one of claims 18 to 20, **characterized in that** the body portion has a body side surface adjacent to the body end surface; and in a thickness direction of the body portion, an end of the protection sheet on the surface of the tab close to the first wall extends to the body side surface of the body portion adjacent to the end.

22. The battery cell according to any one of claims 1 to 21, **characterized in that** the protection sheet and the tab are connected through adhesion; or the protection sheet and the tab are connected through ultrasonic welding.

23. A battery, **characterized by** comprising the battery cell according to any one of claims 1 to 22.

24. An electric apparatus, **characterized by** comprising the battery according to claim 23.
